# EUROPEAN PATENT APPLICATION

(11) **EP 4 265 694 A1**
(43) Date of publication of application: **25.10.2023**
(21) Application number: 21904678.6
(22) Date of filing: 03.09.2021
(51) Int. Cl.: C09D 101/02, C09D 129/02, C09D 4/02, C09D 7/41, G01B 1/00, G01B 21/32

(54) **PROCESS FOR PRODUCING PAINT CONTAINING CARBON NANOMATERIALS, PRODUCTS AND USE IN MONITORING STRAINS, STRESSES AND IMPACT**

(30) Priority: 17.12.2020 BR 102020025922
(71) Applicant: Universidade Federal De Minas Gerais - UFMG, 31270-901 Belo Horizonte (BR); Suzano S.A., 41810-012 Pituba, Salvador, BA (BR)
(72) Inventor: DA CUNHA, Thiago Henrique Rodrigues, 31270-901 Belo Horizonte (BR); FERLAUTO, André Santarosa, 31270-901 Belo Horizonte (BR); LACERDA, Rodrigo Gribel, 31270-901 Belo Horizonte (BR); LADEIRA, Luiz Orlando, 31270-901 Belo Horizonte (BR); DE OLIVEIRA, Sérgio, (deceased) (BR); SILVA, Cláudio Laudares Passos, 31270-901 Belo Horizonte (BR); DE CASTRO, Vinícius Gomide, 31270-901 Belo Horizonte (BR); RESENDE, Raissa Guerra, 31270-901 Belo Horizonte (BR); FERREIRA, Felipe Luiz Queiroz, 31270-901 Belo Horizonte (BR); SIQUEIRA, Germano Andrade, 31270-901 Belo Horizonte (BR); DE SOUZA, Tarcizo da Cruz Costa, 31270-901 Belo Horizonte (BR)
(74) Representative: Aera A/S
(86) International application number: PCT/BR2021/050381
(87) International publication number: WO 2022/126212

(57) **Abstract**

The present technology refers to the process for obtaining dye based on carbon nanotubes and cellulose microfibrils for making films and sensors with piezoresistive characteristics for application in strain, impact and stress sensing.

## Description

This technology refers to the process for obtaining dye based on carbon nanotubes and cellulose microfibrils for making films and sensors with piezoresistive characteristics for application in strains, impact, and stress sensing.

Strain sensors are used in different fields of engineering for detecting and monitoring structural damage and deformations. Extensometers are transducers made from metallic alloys or semiconductor materials that, when attached to a structure, are able of measure mechanical deformations with great accuracy. Small variations in the structure dimensions are mechanically transmitted to the extensometer, which transforms these variations into variations in electrical resistance. The sensitivity of an extensometer is related to its GF (*gauge factor*) defined by the ratio between the relative change in its electrical resistance and strain, GF=(ΔR/R)/ε, where R is the resistance of the material without strain, ΔR is the change in resistance of the material under strain and ε is the strain. The extensometers most commonly used today are made of a copper-nickel alloy, and have a GF of approximately 2. Although these devices are easy to install and offer high measurement accuracy and excellent linearity, their high cost prevents their wide use in structural self-monitoring applications. In addition, traditional extensometers do not have nanoscale resolution and are single axial strain sensors, which means that they are only able to act in one direction.

Developing a new generation of strain sensors that allow structural self-monitoring in real time and on a large scale is one of the paradigms of Industry 4.0. Among the different ways to address this challenge, the development of nanotechnology-based smart materials has attracted considerable scientific interest over the past decades due to the great potential that this technology offers for sensing applications. In particular, great interest is devoted to carbon nanotubes (CNT) that have exceptional electrical and mechanical properties and that can be used to develop new composite materials. Furthermore, the small size of carbon nanotubes and their large specific surface area make them extremely sensitive to both mechanical deformation and chemical functionalization.

Macroscopic networks formed by entangled CNTs have electrical conductivity due to the combination of two physical phenomena: electronic tunneling between CNTs that are sufficiently close and formation of electronically conductive paths between CNTs in contact. Although CNTs exhibit intrinsic piezoresistivity, the piezoresistive effect shown by these macroscopic CNT arrangements is mainly due to the reconfiguration of the conductive network as a result of the actuation of an external force. This generates a mechanical stress that produces a strain in the material, causing the degree of percolation between the tubes to vary. The electrical conductivity is directly proportional to the contact area between the tubes, or in other words, the density of the network of paths for the electrons. The correlation between mechanical stress and the variation in the electrical resistance of the material is the main mechanism used in pressure and strain sensors based on carbon nanotubes. However, if the nanotubes are not aligned in the conductive network or embedded in a polymer matrix, even a small increase in strain can produce irreversible slippage between the tubes, preventing the sensor from working reliably and reproducibly. In this way, the sensor performance is closely related to the way the nanotubes are arranged in the network (aligned or not) and how they interact with the other components of the composite, such as polymers.

The patent document CN105713348 entitled "Strain sensor made of carbon nanotube/epoxy resin composite material and manufacturing process of strain sensor," of 2016, discloses a strain sensor made of composite material of carbon nanotube and epoxy resin, manufactured through the *in situ* polymerization process. The strain sensor comprises a strain body and conductors arranged at the two ends of the strain body, in which the strain body is made of composite material of carbon nanotube, epoxy resin and a curing agent.

The patent document JP2011117965 entitled "Strain measurement device and method of strain measurement using the same," of 2009, describes an extensometer made from a network of intertwined carbon nanotubes, formed by two aligned nanotube films arranged in perpendicular directions. The films were fabricated from vertically aligned CNT arrangements (forests), through the sequential extraction method. In this process, the CNTs are pulled directly from the side of the arrangement and connect to each other due to the intermolecular forces between the tubes. The films formed are self-sustaining and have good mechanical properties. According to the document's inventors, the film arrangement in orthogonal directions allows the strain to be measured in both, transverse and longitudinal directions, by a data processing system connected to the films through electrodes. The main disadvantage of this technology is the level of complexity of the sensor manufacturing process, which entails a high manufacturing cost.

The patent document KR20130084832 entitled "Strain Gauges and Methods of Manufacturing the Strain Sensors," of 2012, refers to the fabrication of a film of carbon nanotubes, in the form of a track on an insulating platform. The device is mounted on a glass or SiO₂ (silica) substrate containing a surface oxide layer with a thickness between 200 and 300 nm. An insulating film, such as polyamide, is deposited on the top of this layer, and over the latter, electrodes are deposited in the form of a Cr (Chromium) metallic film. Afterwards, a CNT film is deposited on the polyamide resin by applying a spray containing a dispersion of CNT in dimethylformaldehyde (DMF). A geometric pattern is printed on the CNT film with the aid of a photolithography mask and oxygen plasma is used to shape the film into the pattern of the printed pattern. Finally, the insulating base on which the device was mounted is separated from the substrate in a bath containing a corrosive solution that dissolves the oxide layer.

The patent document US20060253942A1 of 2003, with the following title "Smart materials: strain sensing and stress determination by means of nanotube sensing systems, composites, and devices," refers to the manufacture of devices based on carbon nanotubes for detecting displacements, strains, stresses, and impacts. The carbon nanotubes used in these devices can be in the form of thin films, buckypapers, composites or simply in the form of a web of tangled tubes. The detection of mechanical stress can be done by monitoring the electrical (resistivities), thermal (thermal conductivity) or optical (photoluminescence and electroluminescence) properties of the material that constitutes the sensory element.

In the article entitled "A carbon nanotube strain sensor for structural health monitoring," of 2006, the authors used commercially obtained single-walled nanotubes (SWCNTs) to make self-sustaining CNT films, usually referred to as buckypapers (BPs), by the vacuum-assisted drying method. In this process, SWCNTs were dispersed in dimethylformamide (1.5 mg.ml⁻¹) with the aid of an ultrasound bath and the obtained suspension was spread on a filter paper to dry in a vacuum oven. Evaporation of the solvent resulted in a film composed of highly intertwined SWCNTs bundles held together by van der Waals forces. However, as these forces are not large enough to prevent slippage between the tubes when the film is subjected to mechanical stress, polymethyl methacrylate (PMMA) was added to the films in order to increase the bond strength between the junctions of the SWCNT. SWCNTs/PMMA composites fabricated through this route were mounted on a cantilever, connected to a Wheatstone bridge and subjected to deflection tests. The material was able to measure the deformations in the cantilever with great precision, showing a maximum measurement factor (GF) close to 6. The process described in this technology is complex and difficult to scale (Kang, M.J. Schulz, J.H. Kim, V. Shanov, D. Shi. Smart Materials and Structures. Vol. 15 737-748. doi: 10.1088/0964-1726/15/3/009).

The article "Highly Stretchable and Wearable Strain Sensor Based on Printable Carbon Nanotube Layers/Polydimethylsiloxane Composites with Adjustable Sensitivity," published in 2018, reports the use of CNT in the manufacture of sensors for monitoring human movements. According to this study, piezoresistive devices made from the deposition of carbon nanotubes on polydimethylsiloxane (PDMS) are highly elastic, susceptible to deformations of the order of 45%, and have gauge factors greater than 35. The authors of this work used a digitally controlled printer to apply the CNT suspension, in the form of a spray, onto PDMS. The number of layers applied was used as a parameter to adjust the sensitivity of the sensors. Although the physical mechanism of operation of this device is similar to that of the subject matter proposed in the present patent application, the two proposals differ both in terms of the implementation methodology and the field of application of the technology. As Wang et al. does not use polymers to perform the attachment of the CNTs to the support, there is a greater restriction on the nature of the substrates that can be used, and consequently the field of application of the device (X. Wang, J. Li, H. Song, H. Huang, J. Gou. ACS Appl. Mater. Interfaces, 10, 2018, 7371-7380. doi:10.1021/acsami.7b17766).

In the technology proposed in this document, the thin films of carbon nanotubes (CNT) and cellulose microfibrils (CFM) exhibit piezoresistive characteristics that can be exploited in structural sensing applications. Sensors produced using the dye of the present technology may exhibit lower production cost and higher sensitivity than the sensors (extensometers) currently available in the market. The composite described comprises cellulose microfibrils as a mechanical reinforcement element for the carbon nanotube network. The interaction between these two materials results in a composite material with unique characteristics: the network formed by the cellulose microfibrils provides elasticity to the film, and provides the main load-bearing component of the composite; the arrangement formed by carbon nanotubes provides the network of conductive paths for electrons, which is susceptible to mechanically induced disturbances and whose electrical response can be used for strain, stresses, and impact sensing.

Thus, the present technology comprises a process for manufacturing a dye comprising carbon nanotubes and cellulose microfibrils and films comprising carbon nanotubes and cellulose microfibrils made from the application or deposition and drying of said dye. The dye is formed by homogeneous dispersion containing a high content of CNTs (close to 1%). Cellulose-derived polymers, such as carboxymethylcellulose, are added to the mixture to act as dispersing, plasticizing, and fixing agents. The films obtained from these dispersions have piezoresistive characteristics superior to those of commercial extensometers, being up to 200 times more sensitive to deformation, and low production cost, which can be up to 100 times lower than that of a commercial extensometer. The use of cellulose microfibrils as a mechanical reinforcement element for the carbon nanotube network gives the film and composite greater mechanical stability and higher reproducibility of results when compared to other strain sensors based on carbon nanomaterials.

Thus, the dye, object of the present technology, allows films formed by a dense highly intertwined network of nanotubes to be deposited on any surface quickly and easily. The use of the natural polymer derived from cellulose provides elasticity and mechanical resistance to the CNT network without significantly compromising its electrical conductivity, contrary to what occurs when other polymers are used (e.g. epoxy resins). Such characteristics give CNT films high piezoresistive sensitivity, which can be exploited for strain, stress, and impact sensing.

The use of strain sensors in structures located in open areas, subject to climatic events, involves a number of technological challenges, related to both, installation and maintenance of the device in operation. In addition, the reproducibility of the sensors depends on a strict control of the conditions of the manufacturing environment, which makes it unfeasible to use the described dye to make sensors directly in the field, outside a minimally controlled environment. Thus, the present technology also describes a sensor fabrication process based on the production and transfer of carbon nanotube and microfibrillar cellulose (CNT/CMF) films to different types of substrates. This method allows the production of sensors in large scale and with high reproducibility, on polymeric substrates that can be fixed directly on the structure to be monitored.

### BRIEF DESCRIPTION OF THE FIGURES

**Figure 1** shows in (a) a scanning microscopy image of a film of carbon nanotubes and cellulose microfibrils deposited on a polyurethane substrate, in (b) the characteristic Raman spectrum of this film, and in (c) the variation of the electrical resistance of the film sheet as a function of its thickness. The thickness of each film was measured from scanning electron microscopy images. The 4-point measurement technique was used for the electrical characterization of the samples.
**Figure 2** presents the piezoresistive response as a function of sheet resistance of CNT/CMF films applied on polyurethane specimens, submitted to tensile tests.
**Figure 3** presents the gauge factor as a function of sheet strength of CNT/CMF films applied on polyurethane specimens: (a) for strains less than 10%; (b) for strains between 50 and 60%.
**Figure 4** shows the electrical response of the sensor illustrated in Figure 1 subjected to tensile and relaxation cycles, at (a) for 7 seconds; at (b) for 200 seconds. The ΔR/R₀ variation of the CNT/CMF film as a function of the number of cycles is presented in (c).
**Figure 5** shows in (a) the cracking pattern observed in CNT/CMF films when subjected to small deformations, and in (b) when subjected to large deformations.
**Figure 6** shows the CNT/CMF film on polyurethane for vehicle traffic monitoring.
**Figure 7** presents the comparison between the electrical response of the commercial extensometer and the CNT/CMF film formed after drying of the dye on a cement specimen.
**Figure** 8 shows the electrical response of the CNT/CMF sensor and the commercial extensometer in a bending test on a cement specimen.
**Figure 9** presents in an atomic force microscopy image of the carbon nanotubes in (a), cellulose microfibrils in (b), and cellulose microfibrils decorated with the carbon nanotubes in (c). The image in (c) is evidence of the synergy that exists between the two materials, as well as the structural and charge transfer element role of the cellulose microfibrils in the composite.
**Figure 10** shows the electrical response of a buckypaper type CNT/CMF sensor installed inside a fiberglass/epoxy composite.
**Figure 11** presents the (a) Deposition of CNT/CMF dye on silicon substrate with etched pattern and, (b-c) transfer of the resulting film onto polyamide substrate.
**Figure 12** presents the deposition of metallic electrical contacts by means of silkscreen.

### DETAILED DESCRIPTION OF THE TECHNOLOGY

The present technology refers to the process for obtaining dye based on carbon nanotubes and cellulose microfibrils for making films and sensors with piezoresistive characteristics for application in strain, impact, and stress sensing.

Furthermore, the present technology refers to a dye comprising cellulose microfibrils, at a concentration between 0.1 and 1% mass/volume with diameters between 20nm and 700nm and lengths greater than 10 micrometers; carbon nanotubes, at a concentration between 0.1 and 1% mass/volume, with diameters between 10nm and 20nm and lengths greater than 3 micrometers; and plasticizing agent at a concentration of 0.1 to 0.5% mass/volume, consisting of acrylic-based polymers, preferably carboxymethylcellulose.

The present technology also relates to a film of carbon nanotubes and cellulose microfibrils comprising a concentration of carbon nanotubes between 10 and 90% mass/mass; cellulose microfibrils at a concentration between 10 and 90% mass/mass; and a plasticizing agent at a concentration of 10 to 50% mass/mass; such film being obtained from drying the dye after application on a surface.

The process for obtaining the carbon nanomaterials dye comprises the following steps:
a. Obtaining carbon nanotubes (CNT), through techniques such as chemical vapor deposition, electric arc discharge, laser ablation, plasma torch and liquid electrolysis, with diameters between 10 and 20 nm, and lengths greater than 3 µm, homogeneously suspended in water/alcohol or water/glycol, at a concentration of 0.1% to 2% mass/volume, the proportion of water in the solvent being 50% or greater;
b. Obtaining cellulose microfibrils (CMF) with diameters between 20 nm and 700 nm and lengths greater than 10 µm and final concentration of cellulose microfibrils between 0.1% and 1% mass/volume;
c. Mixing the materials obtained in steps "a" and "b" in water, at concentrations between 0.1% and 10% mass/volume, and in the ratio of 30 to 70% CNT and 30 to 70% CMF, using a high shear disperser, operating between 500 and 25,000 RPM, for time intervals between 5 and 60 min;
d. Centrifuging the suspension obtained in step "c" between 500 and 4,000 RPM, for time intervals between 5 and 60 min;
e. Removing the precipitate from the material obtained in step "d," in order to obtain a homogeneous suspension whose final concentration of carbon nanotubes varies between 0.1 and 1% mass/volume and the concentration of cellulose microfibrils varies between 0.1 and 1% mass/volume;
f. Adding 0.1 to 0.5% mass/volume of a plasticizing agent to the suspension obtained in step "e," the plasticizing agent being acrylic-based polymers, preferably carboxymethylcellulose, and homogenizing.

In step "a", the nanotubes may be in a homogeneous suspension at a concentration of 0.1% to 1% mass/volume. The synthesis of carbon nanotubes can be performed by using techniques such as chemical vapor deposition, electric arc discharge, laser ablation, plasma torch, and liquid electrolysis. The obtained carbon nanotubes can be multi-walled, single-walled, few-walled, aligned, functionalized or "as-grown" and can be substituted with other carbon nanomaterials such as nanographite and/or graphene.

Step "b" shows a homogeneous suspension with a final concentration of cellulose microfibrils between 0.1% and 1% mass/volume. Cellulose microfibrils can be produced by various extraction methods, involving chemical, mechanical and/or enzymatic processes. They can contain functional groups on the surface, such as carboxyls, amines, acetates, nitrates, among others.

Carbon nanotubes can be synthesized from a catalyst obtained by calcining a mixture containing iron and cobalt salts, and ceramic particles. The synthesis takes place within the temperature range between 600 and 950 °C, under a flow of a hydrocarbon gas and an inert carrier gas. The produced nanotubes can be laterally functionalized with oxygenated groups by acid treatment.

The carbon nanotube dye, obtained by the process described above, comprises cellulose microfibrils at a concentration between 0.1 and 1% mass/volume with diameters between 20nm and 700nm and lengths greater than 10 micrometers; carbon nanotubes, at a concentration between 0.1 and 1% mass/volume, with diameters between 10nm and 20nm and lengths greater than 3 micrometers; and plasticizing agent at a concentration of 0.01 to 0.5% mass/volume, consisting of carboxymethylcellulose, or cellulose-derived polymers, ethylene glycol, or acrylic base.

The film of the present technology can be fabricated from the dye obtained in the present technology by means of its application via spray, brush, roller or by immersion (Dip coating). The film can also be a self-sustaining nanotube composite (Buckypaper), made from a suspension or paste, by filtration, spreading and drying (Film Casting) or by simple solvent evaporation.

The application of the dye directly on the site of interest provides adhesion of the dye that, once dry, provides an intact film closely adhered to the surface, even if the surface is irregular or has discontinuities. Advantageously, the application is carried out in a single operation, either by spraying, rolling or calendering, or by multiple applications, if convenient.

Alternatively, the dye can be applied on an intermediate substrate, generating a film, which can be removed from the substrate for subsequent disposal at the site of interest.

The application of the film on a substrate presents the convenience of making the film mobile and portable, meeting a need for application in locations that do not allow access for application of the dye. Furthermore, it provides the ability for quickly changeover, in demands that do not tolerate the drying and curing time of the dye, which is the subject matter of the present technology. The film produced on a substrate can be applied with the substrate itself or detached from it, after drying, and applied over the site of interest. Additionally, the film can be incorporated into matrices, such as epoxy, by a resin infusion process, resulting in a composite. The produced film presents high piezoresistive sensitivity, with a gauge factor greater than 10, and can reach values close to 1,000, and present a linear electrical response in the range of small deformations (0 to 2%) and can be used to strain, stress and impact monitoring.

The carbon nanotube sensors comprise the obtained film deposited on a transfer platform with an etched pattern and transferred to a final substrate, preferably a polymeric film and with an adhesive layer (primer), such as acrylic, polyurethane or polyester, by means of mechanical contact preferably stamping. To the sensors are added metallic electrical contacts deposited by means of a silkscreen process, using a conductive dye/paste. A protective layer is applied, consisting of a polymeric film, applied by lamination, transfer, silkscreen, spin coating, dip coating, film casting or coil coating.

The films and sensors defined above can be used for monitoring strain, stress and impact.

The examples below describe aspects of the present technology and should not be considered as limiting.

### EXAMPLE 1 - Dye based on carbon nanotube and cellulose microfibrils

A catalyst for the synthesis of carbon nanotubes was prepared by impregnating iron citrate and cobalt acetate in alumina powder (Al₂O₃), in the molar ratio of 2Fe:1Co:5Al₂O₃, in a mortar with pestle. The mixture was calcined in a muffle furnace for 3 hours at 750°C.

Multi-walled carbon nanotubes (MWCNTs) were produced using the Chemical Vapor Deposition (CVD) technique in a rotating bed tubular reactor. The reactor is a hot-wall furnace consisting of a resistive heating chamber surrounding a 120 cm long and 60 mm diameter quartz tube, designed to rotate around its main axis. CNT synthesis was carried out at 730 °C under a constant flow of 2 L/min of argon and 1.5 L/min of ethylene under atmospheric pressure conditions. The system was continuously fed with a catalyst in powder form, consisting of iron (Fe) and cobalt (Co) oxide nanoparticles supported on alumina (Al₂O₃) particles, through a feeder connected to the inlet of the quartz tube. The quartz tube was kept inclined at 10° in relation to the horizontal and set to rotate at a speed of 6 RPM in order to promote the transport of the catalyst through the hot zone of the furnace. A continuous process was employed, where the carbon nanotubes formed on the catalyst powder were continuously transported to a storage container coupled to the tube outlet.

The "as-grown" nanotubes were laterally functionalized with -OH and -COOH groups through an acid treatment process (HNO₃/H₂SO₄) carried out in an ultrasonic bath under a controlled temperature of 80 °C. The material was washed and centrifuged 3 times before being finally dried in a muffle furnace (100°C for 24h) and ground in an automated pistil mill. The degree of functionalization of the CNTs can be adjusted within the range comprised between 1 and 15 % by mass.

Cellulose microfibrils can be obtained by defibrillation processes of cellulosic pulp by shear forces. These processes can be grinding, high pressure homogenization, disc refining, microfluidization, among others. The microfibrils obtained through this process have diameters between 20 and 700 nm, and lengths greater than 10 micrometers. The functionalized carbon nanotubes and cellulose microfibrils, in the proportion of 60% CNT and 40% CMF, were dispersed in water with the aid of a high shear homogenizer operating at 20,000 RPM for 10 min. The suspension obtained, with a concentration of 2% of solids, was centrifuged at 2,000 RPM for 6 minutes in a bench top mini centrifuge in order to remove the non-dispersed CNTs and MFCs agglomerates. The supernatant was separated from the precipitate and centrifuged once more at 3,000 RPM for 5 minutes. The final concentration of carbon nanotubes in the suspension is 0.6% mass/volume while that of cellulose is 0.2% mass/volume.

A dye for spray application was produced by adding carboxymethylcellulose (CMC) to the suspension obtained in the previous step. CMC plays the role of a plasticizing agent and its concentration in the mixture can vary between 0.1 and 0.5% mass/volume depending on the desired adhesion and electrical resistance of the dye after drying. As a rule, the higher the concentration of CMC in the mixture, the lower the electrical and thermal conductivity of the dye. The CMC was homogenized with the CNT/CMF suspension with the aid of the high shear mixer.

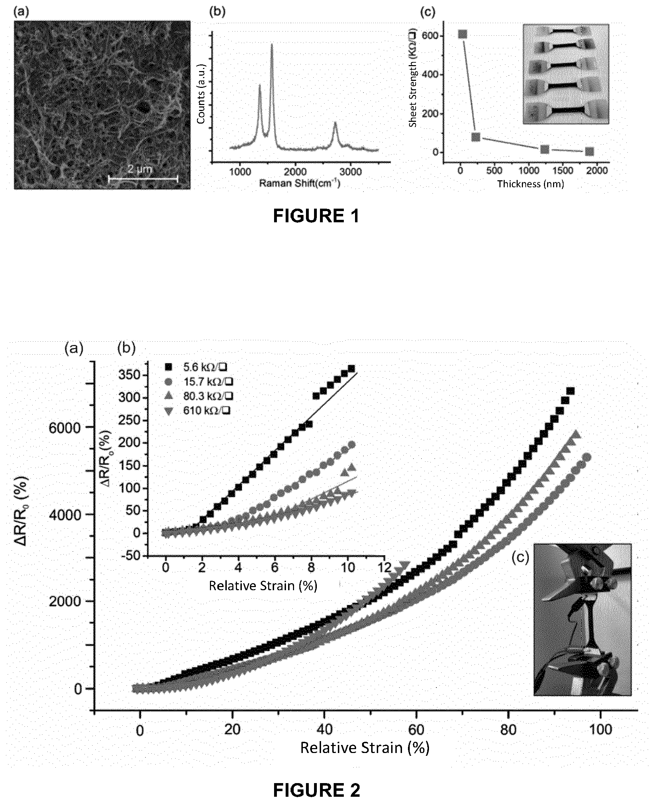

The piezoresistive functionality of the CNT/CMF dye was tested on polyurethane and mortar specimens. The dye was applied to the surface of the samples with an airbrush-type gun and drying was performed using a hot air blower. Several layers were applied until the electrical resistance of the films reached the desired values. A scanning electron microscopy image (a) and a Raman spectrum of CNT/CMF films deposited on a polyurethane plate (b) are shown in Figure 1. As CNT and CMF have similar morphological characteristics, it is usually not possible to differentiate the two materials using electron microscopy. Also, since CNTs are Raman resonant, the spectrum of the composite exhibits only the characteristic peaks of CNTs.

### EXAMPLE 2 - Polyurethane sensing with carbon nanotube and cellulose microfibrils film

Polyurethane specimens were made in the form of a tie (Dogbone) following the ASTM D412 model C standard. The CNT/CMF dye was applied in the central region of the specimens, varying the number of layers applied in order to obtain CNT/CMF films with different sheet strengths, giving rise to carbon nanotubes and cellulose microfibrils films. As shown in Figure 1(c), the sheet strength drops dramatically with layer thickness, but saturates for the thickness value close to 2,000 nm. The electrical contact of the samples was made in silver dye and metallic clamps were used to connect the electrical circuit of the film to a Keithley 2000 digital multimeter. The specimens were subjected to tensile forces in a DL10000 universal mechanical testing machine and the electrical resistance of the films was monitored in real time by a computer connected to the multimeter. The aata were acquired through a LabView application.

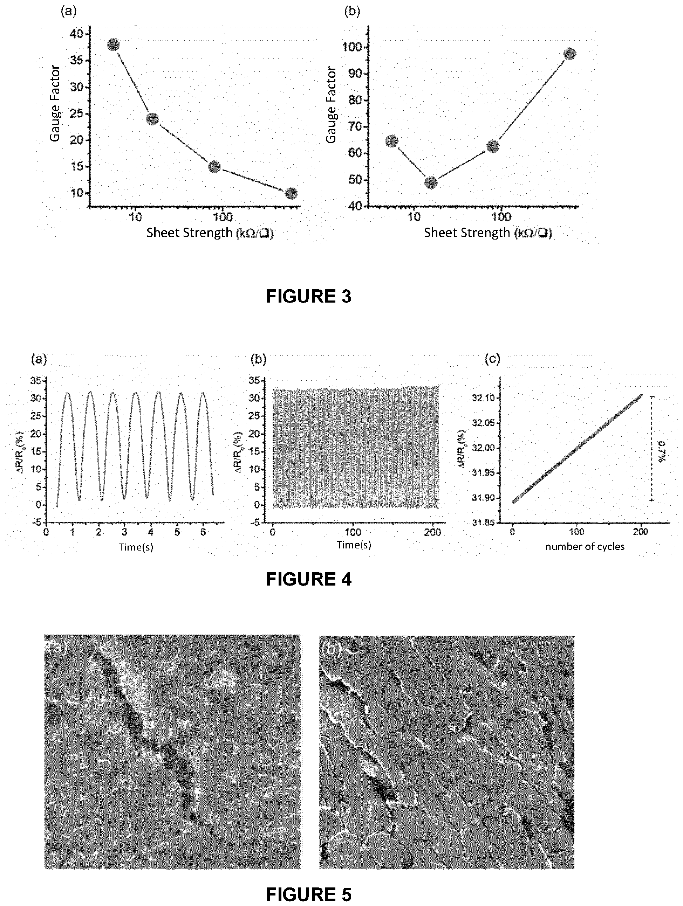

According to Figure 2, the piezo-resistive response of the sensors depends on the magnitude of the strain. The transition from the non-sensitive region to the sensitive region occurs first in the thicker CNT films with lower sheet resistance. These films also exhibit higher sensitivity in the range of strains below 10%, with the gauge factor (given by the slope of the curves) decreasing as the sheet resistance of the films increases (Figure 3 (a)). In this regime of small deformations, the 5.6 KΩ/□ film exhibits a gauge factor of 38, about 20 times higher than that of commercial extensometers.

As the strain of the samples increases and assumes values greater than 20%, the thinner films (more resistive) begin to exhibit equal or even greater sensitivity than the more conductive films, as shown in Figure 3 (b). This effect is particularly prominent in the 610 KΩ/□ sample (blue curve Figure 2) whose curve slope varies at a much higher rate than the other curves. As a result, the interruption of the electron conduction path occurs prematurely in this sample, before the end of the mechanical test, as can be seen in Figure 2.

In order to evaluate the electrical response of the sensors after repeated cycles of stress and relaxation, tests were carried out on a mechanical dynamic analyzer (DMA). The samples that showed higher sensitivity to low strains, that is, those more conductive, were subjected to cycles of 1 Hz, with an amplitude equal to 2% of their original length. The characteristic electrical response of these samples is shown in Figure 4.

The tested samples showed good durability and consistent electrical response even after several cycles. As shown in Figure 4 (b and c), the variation in ΔR/R0 is only 0.7% even after the sample is subjected to 200 cycles of stress and relaxation. This result indicates that the occurrence of fractures capable of irreversibly affecting the electrical conductivity of the films is limited in this small strain regime, a conclusion that is corroborated by SEM images. Moreover, even when cracks are observed in the films (Figure 5 (a)), carbon nanotube bridges form over the cracks preventing further deterioration of the conductive path formed by the nanotube network. In contrast, deformations greater than 10% of the original length of the specimens cause cracks that irreversibly affect the electrical conductivity of the films (Figure 5 (b)).

The variation in the sensitivity of the sensors with deformation, observed in the tensile test, can be attributed to the existence of two strain regimes, governed by distinct mechanisms. For small strains, the CNT/CMF matrix exhibits an elastic behavior. Most of the CNTs in the network, even under strain, continue to make contact with each other so that the variation in electrical resistance is mainly due to a small variation in the probability of electronic tunneling between the tubes. In this regime, the more conductive films, show better piezoresistive response since ΔR/R0 is higher for small values of R0.

With increasing strain, the CNTs begin to detach from the MFC matrix, giving rise to cracking and slippage between the layers of films. In this regime, the thinner films, that is, those that are more resistive, have a better piezoresistive response precisely because they have fewer tubes making contact with each other. As the number of regions where the tubes overlap is limited, any additional deformation that may cause the destruction of the existing contact regions is capable of producing a large increase in the electrical resistance of the film. This same mechanism also leads to the interruption of the electron conduction path after the film reaches a critical deformation that depends on its thickness.

The mechanism of tunneling resistance variation is dominant when there is a concentration of nanotubes well above the percolation limit and the sensor is subjected to small strains. The mechanism based on the breakdown of the electrical contacts between the tubes in the network is dominant when the sensors are subjected to large deformations or when they are made using a low concentration of CNT, close to the percolation limit.

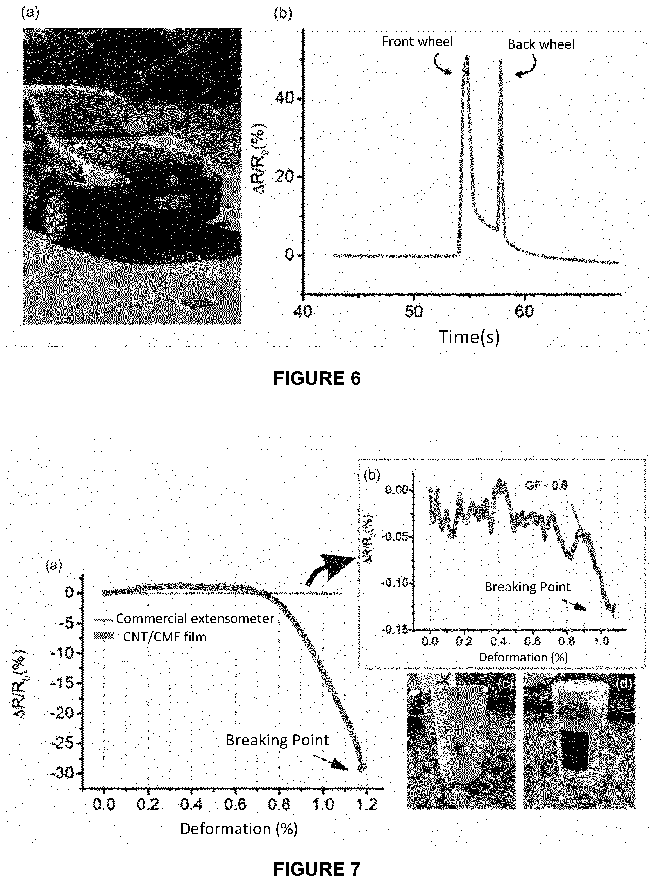

The CNT/CMF films presented in this patent application have all the characteristics required for it to be used for real-time monitoring of polyurethane structures such as pipes. Even its sensitivity can be modulated by adjusting the thickness of the coating. In addition, the described material also has great potential for vehicle flow and speed monitoring applications. As shown in Figure 6, the CNT/CMF film can be incorporated into polyurethane speed reducer for traffic and vehicle speed sensing.

### EXAMPLE 3 - Sensing in mortar with carbon nanotubes and cellulose microfibrils films

Mortar specimens were made in the form of cylinders with 5 cm in diameter and 10 cm in height, following the ABNT NBR 7215 standard. The lateral surface of the specimens was sanded and cleaned for the application of CNT/CMF dye using an airbrush gun. The drying was performed on each layer applied with the aid of a hot air blower, resulting in films of carbon nanotubes and cellulose microfibrils. A total of 5 layers were applied, obtaining a sheet resistance of approximately 10 KΩ/□. Copper wires were soldered to copper tape which was connected to the CNT/CMF film with silver dye. The electrical resistance of the films was monitored in real time following the same procedure described above. The specimens were subjected to compression tests and the results c, as shown in Figure 7.

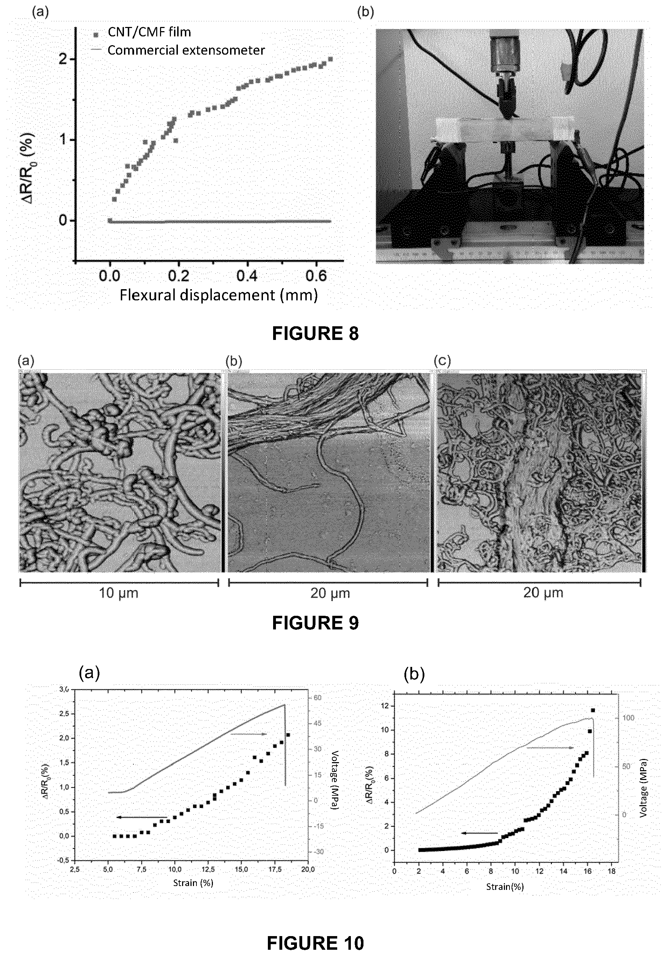

The absence of variation in electrical resistance for strains lower than 0.7%, observed both for the commercial extensometer and for the CNT/CMF sensor, is due in part to the Poisson effect of the specimen. This is because the force acting on the sample along the faces in direct contact with the press prevents the material from flowing in this region. This causes the specimen to experience a radial strain on its free surfaces, just as occurs in a barrel. This mechanism prevents the compression applied on the sample from being fully transferred to the surface where the sensors are installed, resulting in the effect shown in Figure 8.

As compression increases, both sensors become strain responsive, however, the sensitivity of the nanotube-based sensor (GF-68) is more than 113 times higher than that of the commercial extensometer (GF-0.6).

In order to evaluate the sensitive performance of the CNT/CMF film to strain generated by bending, mortar specimens in the form of a prism measuring 4 cm x 4 cm x 16 cm were made. The assembly of the specimen for the bending test and the results obtained are shown in Figure 8, in which it is observed that the CNT/CMF based sensor, unlike the commercial extensometer, responds almost immediately to the force application. Further, the electrical response of the CNT sensor shows an approximately linear behavior from the beginning to the end of the test. The commercial extensometer, on the other hand, only starts to operate effectively for strains close to the breaking point of the specimen. This effect can be attributed to the existence of several interfaces between the specimen wall and the sensing element of the extensometer (metallic track), which prevents the specimen strain from being fully transferred and measured by the sensor. That is, unlike the CNT/CMF sensor, which has its sensing element directly integrated into the wall of the test specimen, between the measuring electric circuit of the commercial extensometer and the wall of the test specimen there is a polyamide film and an epoxy glue film that act as dampers, reducing the sensitivity of the sensor. In addition, the commercial extensometer has no nanoscale resolution as is the case with the CNT/CMF sensor.

### EXAMPLE 4 - Composite films of cellulose microfibrils and low-wall carbon nanotubes

Buckypapers-like nanostructured composites were produced from bundles of double- and triple-walled carbon nanotubes, with diameters ranging from 3 to 8 nm, and lengths of the order of 300 µm, and cellulose microfibrils, with dimensions of 20-50 nm of width and lengths on the order of several hundred micrometers. The CNTs and CMFs were dispersed in water at a 1:1 ratio with the aid of a high shear Ultra-Turrax-type homogenizer (20,000 RPM for 5 min), resulting in a homogeneous paste with a concentration of 2% m/v. This paste was uniformly spread over a paper filter using a Doctor Blade film applicator, and placed to dry in a muffle furnace at 100°C for 1h. After drying, the film formed on the paper filter was detached and placed back in the muffle furnace for another 1 hour for complete removal of the solvent.

These CNT/CMF films exhibit paper-like characteristics, such as mechanical strength and bendability. They also exhibit piezoresistive behavior just like CNT/CMF films.

### EXAMPLE 5 - Sensing in epoxy resin and in fiberglass/epoxy composite

CNT/CMF films were incorporated into epoxy matrices via vacuum-assisted resin infusion process. The films were completely encapsulated by the polymer, except for the ends, which were exposed for the installation of electrical contacts.

The specimens were subjected to tensile testing while the electrical resistance of the CNT/CMF films was monitored by a Keithley 2000 model digital multimeter. As shown in Figure 10, the electrical response of the films is proportional to the strain of the specimen and the mechanical stress applied on it.

This result is particularly interesting, as it demonstrates the feasibility of fabricating self-monitoring structures based on carbon nanotubes and cellulose microfibrils.

### EXAMPLE 6 - Obtaining carbon nanotube and cellulose microfibrils (CMF) sensors on different substrates

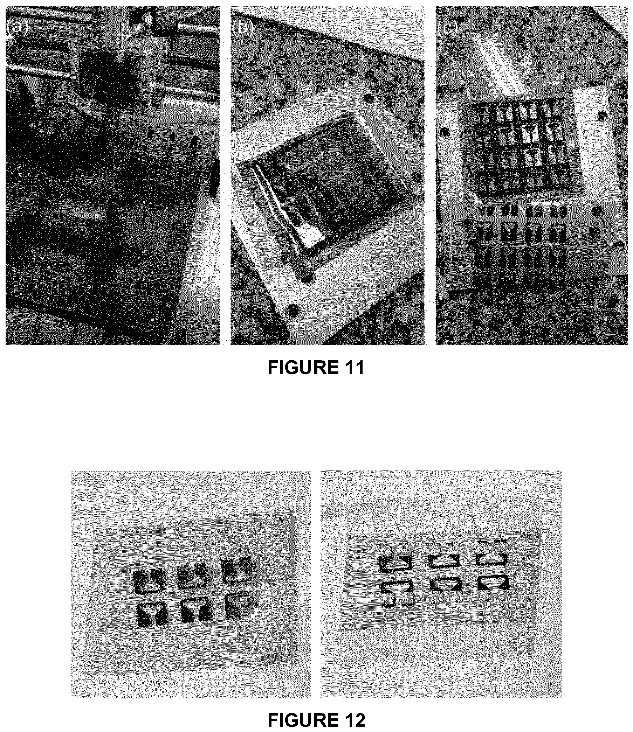

To obtain the sensors, initially the CNT/CMF dye of the present technology was deposited, via spraying, on a substrate on which it presents low adhesion, such as silicone, which was used as a transfer platform. On this substrate a pattern (high or low relief) was engraved to define the geometry and orientation of the region of greatest sensitivity of the sensor, as shown in Figure 11. The dye was sprayed by an automatic applicator, keeping the substrate temperature around 130 °C, in order to accelerate the evaporation of the solvent, favoring the formation of a homogeneous film.

Next, the film deposited on the transfer platform was placed in contact with the final substrate, and pressed against it until the pattern was transferred.

If the affinity of the CNT/CMF film to the final substrate is high, transfer occurs naturally. Otherwise, an adhesive layer (primer) must be previously deposited on the surface of the receiving polymer to ensure adhesion of the CNT/CMF film. This layer must allow the transfer, without energy dissipation, of the mechanical stress applied on the polymeric substrate to the CNT/CMF film.

The sensor sensitivity depends on the ability of the polymeric film to transfer the strain of the structure to the sensing element of the sensor. Therefore, it can neither be too flexible, to the point of preventing the propagation of the strain, nor too rigid, to the point of breaking. In addition, it must have good chemical resistance, UV radiation and temperature variation if used outdoors. Kapton-type polyamide films meet these requirements, as do some polyurethanes and silicones.

Electrical contacts can be applied to CNT/CMF films in several ways. Although metal evaporation is a widely used and easily accessible strategy, it is a technique that relies on expensive equipment and high energy consumption. An alternative to this method is the deposition of electrical contacts from conductive dyes/pastes, using techniques such as spraying or silkscreen. In the latter case, the conductive dye must have a certain flexibility and its electrical resistance must be much lower than that of the CNT/CMF film so that the sensor reading is not affected. The electrical contacts shown in Figure 12 were made by silkscreen, using a paste based on metallic silver and polyurethane. The paste, after drying, shows good adhesion to the substrate, and also allows the attachment of metallic wires. The contact resistance is of the order of a few ohms.

The last step of the process consists in enveloping the sensor, protecting the sensitive material and the electrical contacts from humidity, direct light incident, and other mechanical, chemical and biological processes that could degrade the device. The protective layer must be a polymeric film, preferably made of the same material used as the substrate, and can be applied through lamination, transfer, silkscreen, spin coating, dip coating, film casting, or coil coating.

The sensors manufactured using this method must be firmly fixed to the structure to be monitored, in order to ensure the accuracy of their measurements. The adhesive used for attachment depends on the substrate material and the structure material, and cyanoacrylates, silicones, epoxy, polyurethanes, acrylics and polyesters can be used.

## Claims

1. **A PROCESS FOR OBTAINING DYE FROM CARBON NANOMATERIALS, characterized in that** it comprises the following steps:
**a)** Obtaining carbon nanotubes (CNT), through techniques such as chemical vapor deposition, electric arc discharge, laser ablation, plasma torch and liquid electrolysis, with diameters between 10 and 20 nm, and lengths greater than 3 µm, homogeneously suspended in water/alcohol or water/glycol, at a concentration of 0.1% to 2% mass/volume, the proportion of water in the solvent being 50% or greater;
**b)** Obtaining cellulose microfibrils (CMF) with diameters between 20 nm and 700 nm and lengths greater than 10 µm and final concentration of cellulose microfibrils between 0.1% and 1% mass/volume;
**c)** Mixing the materials obtained in steps "a" and "b" in water, at concentrations between 0.1% and 10% mass/volume, and in the ratio of 30 to 70% CNT and 30 to 70% CMF, using a high shear disperser, operating between 500 and 25,000 RPM, for time intervals between 5 and 60 min;
**d)** Centrifuging the suspension obtained in step "c" between 500 and 4,000 RPM, for time intervals between 5 and 60 min;
**e)** Removing the precipitate from the material obtained in step "d," in order to obtain a homogeneous suspension whose final concentration of carbon nanotubes varies between 0.1 and 1% mass/volume and the concentration of cellulose microfibrils varies between 0.1 and 1% mass/volume;
**f)** Adding 0.01 to 0.5% mass/volume of a plasticizing agent to the suspension obtained in step "e," the plasticizing agent being acrylic-based polymers, such as carboxymethylcellulose, and homogenizing.

2. **THE PROCESS FOR OBTAINING DYE FROM CARBON NANOMATERIALS**, according to **claim 1, step "a", characterized in that** carbon nanotubes are multi-walled, single-walled, few-walled, aligned, functionalized or "as-grown" (*as-grown*) and can be substituted with other carbon nanomaterials such as nanographite and/or graphene.

3. **A DYE FROM CARBON NANOTUBE,** obtained by the process described in claims 1 and 2, **characterized in that** it comprises cellulose microfibrils at a concentration between 0.1 and 1% mass/volume with diameters between 20nm and 700nm and lengths greater than 10 micrometers; carbon nanotubes, at a concentration between 0.1 and 1% mass/volume, with diameters between 10nm and 20nm and lengths greater than 3 micrometers; and plasticizing agent at a concentration of 0.01 to 0.5% mass/volume, consisting of carboxymethylcellulose, or polymers derived from cellulose, ethylene glycol or acrylic base.

4. **A FILM FROM CARBON NANOTUBE** obtained from the dye defined in claim 3, **characterized in that** the dye is applied to a surface via spray, brush, roller or by immersion (Dip coating) and it is subsequently dried, and comprises carbon nanotubes in a concentration between 10 and 90% mass/mass, cellulose microfibrils at a concentration between 10 and 90% mass/mass; and a plasticizing agent at a concentration of 1 to 50% mass/mass.

5. **THE FILM FROM CARBON NANOTUBE, according to claim 4, characterized in that** the film is a composite of self-sustaining nanotubes (Buckypaper), manufactured from a suspension or paste, by filtration, spreading and drying (Film Casting) or by simple solvent evaporation.

6. **SENSORS FROM CARBON NANOTUBES,** comprising the film **defined in claims 4 and 5, characterized in that** the film is deposited on a transfer platform with an etched pattern and transferred to a final substrate, such as a polymeric film with an adhesive layer (primer), such as acrylic, polyurethane or polyester, by means of mechanical contact, such as stamping.

7. **THE SENSORS FROM CARBON NANOTUBES, according to claim 6, characterized in that** it comprises metallic electrical contacts deposited by means of a silkscreen process, using a conductive dye/paste.

8. **THE SENSORS FROM CARBON NANOTUBES, according to claim 7, characterized in that** it comprises and a protective layer, consisting of a polymeric film, applied by means of lamination, *transfer*, silkscreen, *spin coating, dip coating, film casting*, or *coil coating.*

9. **USE OF THE FILMS AND SENSORS FROM CARBON NANOTUBES defined in any one of claims 4 to 8, characterized in that** it is for strain, stresses and impact monitoring.
